# EUROPEAN PATENT APPLICATION

(11) **EP 4 832 105 A1**
(43) Date of publication of application: **28.10.2026**
(21) Application number: 24908058.1
(22) Date of filing: 18.12.2024
(51) Int. Cl.: H01M 4/525, H01M 4/36, H01M 4/505, H01M 4/131, H01M 10/052, H01M 4/02

(54) **CATHODE ACTIVE MATERIAL FOR ALL-SOLID BATTERY, AND ALL-SOLID BATTERY COMPRISING SAME**

(30) Priority: 18.12.2023 KR 20230184951
(71) Applicant: POSCO Holdings Inc., Pohang-si, Gyeongsangbuk-do 37859 (KR)
(72) Inventor: LEE, Jaemyung, Pohang-si, Gyeongsangbuk-do 37859 (KR); MOON, Jiwoong, Pohang-si, Gyeongsangbuk-do 37859 (KR); PARK, Yooncheol, Pohang-si, Gyeongsangbuk-do 37859 (KR); PARK, Junhyeon, Pohang-si, Gyeongsangbuk-do 37859 (KR); PARK, Chi Rook, Pohang-si, Gyeongsangbuk-do 37859 (KR)
(74) Representative: Pfenning, Meinig & Partner mbB
(86) International application number: PCT/KR2024/020592
(87) International publication number: WO 2025/135775

(57) **Abstract**

The present invention relates to a positive electrode active material for an all-solid-state battery, the positive electrode active material being in the form of secondary particles formed by aggregation of a plurality of primary particles, wherein the secondary particles have an average particle diameter (D50) of 2 µm to 7 µm, and the positive electrode active material has an average active area of 50 µm² to 110 µm².

## Description

### [TECHNICAL FIELD]

The present invention relates to a positive electrode active material for an all-solid-state battery and an all-solid-state battery including the same.

### [BACKGROUND ART]

As research on safety issues and energy density of high-capacity batteries has attracted attention, all-solid-state batteries have been spotlighted as next-generation batteries.

In an all-solid-state battery, a liquid electrolyte, which may cause explosion, is replaced with a solid electrolyte, and thus a flammable solvent is not used in the battery. Accordingly, ignition or explosion due to a reaction such as decomposition of a conventional electrolyte solution does not occur at all, and therefore safety of the battery can be secured.

In addition, since lithium metal or a lithium alloy can be used as a negative electrode material, energy density with respect to mass and volume of the battery can be improved.

However, since a solid electrolyte generally has lower lithium ion conductivity than a liquid electrolyte, improvement of rate characteristics is an important technical problem in an all-solid-state battery.

### [DETAILED DESCRIPTION OF THE INVENTION]

### [Technical Problem]

Accordingly, one object of the present invention is to provide a positive electrode active material for an all-solid-state battery having improved rate characteristics, and an all-solid-state battery including the same.

### [Technical Solution]

One embodiment of the present invention provides a positive electrode active material for an all-solid-state battery, the positive electrode active material being in the form of secondary particles formed by aggregation of a plurality of primary particles, wherein the secondary particles have an average particle diameter (D50) of 2 µm to 7 µm, and the positive electrode active material has an average active area of 50 µm² to 110 µm².

The positive electrode active material may include a lithium metal oxide having a nickel-containing layered crystal structure and a coating layer disposed on the lithium metal oxide.

A content of nickel in the lithium metal oxide may be 70 mol% or more based on a total number of moles of metals excluding lithium.

The coating layer may contain a lithium ion conductive oxide.

The lithium ion conductive oxide may be represented by the following Chemical Formula 1.

[Chemical Formula 1] Liₓ₁D_{y1}O_{z1}

In Chemical Formula 1, 0≤x1≤3, 0<y1≤2, 0<z1≤4, and D is Zr, Nb, Ti, V, B, P, or a combination thereof.

The lithium ion conductive oxide may be represented by the following Chemical Formula 2.

[Chemical Formula 2] Liₓ₂Zr_{y2}O_{z2}

In Chemical Formula 2, 0.5≤x2≤2.2, 0.9≤y2≤1.1, and 2.6≤z≤3.4.

The lithium metal oxide may be represented by the following Chemical Formula 3.

[Chemical Formula 3] Liₐ[Niₓ₃Co_{y3}Mn_{z3}M_{w}]O₂

In Chemical Formula 3, 0.8≤a≤1.3, 0.7≤x3<1, 0≤y3≤0.3, 0≤z3≤0.3, 0≤w≤0.2, x3+y3+z3+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

Another embodiment of the present invention provides a positive electrode for an all-solid-state battery, including the above-described positive electrode active material.

Still another embodiment of the present invention provides an all-solid-state battery including the positive electrode for an all-solid-state battery.

### [Advantageous Effects]

The positive electrode active material for an all-solid-state battery according to one embodiment of the present invention may have improved rate characteristics and resistance characteristics as an average active area is controlled.

### [BRIEF DESCRIPTION OF THE DRAWINGS]

FIG. 1 is an example of an SEM image of a positive electrode active material for an all-solid-state battery.
FIG. 2 is an image segmented into individual primary particle units derived from the SEM image of FIG. 1 using image software.
FIG. 3 is a conceptual view showing a process of obtaining an average active area by assuming that primary particles are spherical.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### 1. Positive Electrode Active Material for All-Solid-State Battery

An all-solid-state battery generally uses inorganic solid electrolyte powder as an electrolyte. Unlike a general lithium ion battery using a liquid electrolyte, characteristics of the all-solid-state battery are greatly affected by a surface contact area between a positive electrode active material and a solid electrolyte, surface reaction characteristics, and whether physical surface contact is maintained after expansion/contraction during charging and discharging.

In particular, since a solid electrolyte generally has an issue of having lower ion conductivity than a liquid electrolyte, research on quantitative physical properties of a positive electrode active material for an all-solid-state battery, which can improve rate characteristics and resistance characteristics, is required.

Accordingly, the present inventors repeatedly studied a method capable of improving rate characteristics and resistance characteristics of an all-solid-state battery, and completed the present invention by finding that it is important to control a surface contact area between a positive electrode active material for an all-solid-state battery and a solid electrolyte, hereinafter referred to as an "active area" in the present specification.

More specifically, the positive electrode active material for an all-solid-state battery according to one embodiment of the present invention may be in the form of secondary particles formed by aggregation of a plurality of primary particles.

In the present specification, "secondary particle" means an aggregate in which several tens to several hundreds of primary particles are aggregated by physical or chemical bonding between the primary particles even without an intentional aggregation or assembly process for the primary particles, that is, a secondary structure.

In addition, "primary particle" means a minimum particle unit distinguished as one lump when a cross-section of a positive electrode active material is observed through a scanning electron microscope (SEM), and may be composed of one crystal grain or may be composed of a plurality of crystal grains.

In addition, "crystal grain" means a distinguishable region in which atoms in a primary particle form a lattice structure in a predetermined direction.

In addition, the secondary particles have an average particle diameter (D50) of 2 µm to 7 µm, and more specifically 3 µm to 6 µm. When the average particle diameter (D50) of the secondary particles is too small, a positive electrode mixture density becomes too small, and thus it may be difficult to implement high energy density. When the average particle diameter (D50) of the secondary particles is too large, a movement path of lithium ions in the positive electrode active material becomes too long, and thus rate characteristics and resistance characteristics may deteriorate. In addition, when the average particle diameter (D50) of the secondary particles satisfies the above range, an effect of improving rate characteristics by adjusting the average active area of the positive electrode active material described below to a range according to the present invention can be more preferably implemented.

In the present specification, the average particle diameter (D50) may be defined as a particle diameter corresponding to 50% of a volume cumulative amount in a particle size distribution curve of particles. The average particle diameter (D50) may be measured, for example, using a laser diffraction method.

In particular, the positive electrode active material for an all-solid-state battery according to one embodiment of the present invention has an average active area of 50 µm² to 110 µm², and more specifically 70 µm² to 110 µm². When the average active area of the positive electrode active material is too small, an area available for insertion and deintercalation of lithium ions is reduced, and thus rate characteristics and resistance characteristics of the positive electrode active material may deteriorate. When the average active area of the positive electrode active material is too large, a resistance layer due to side reactions between the positive electrode active material and the solid electrolyte is excessively formed, and rather, rate characteristics and resistance characteristics may deteriorate. Accordingly, when the average active area of the positive electrode active material for an all-solid-state battery satisfies the above range, rate characteristics and resistance characteristics can be preferably implemented.

Meanwhile, the average active area of the positive electrode active material for an all-solid-state battery can be obtained using an SEM image of the positive electrode active material and image software as described below.

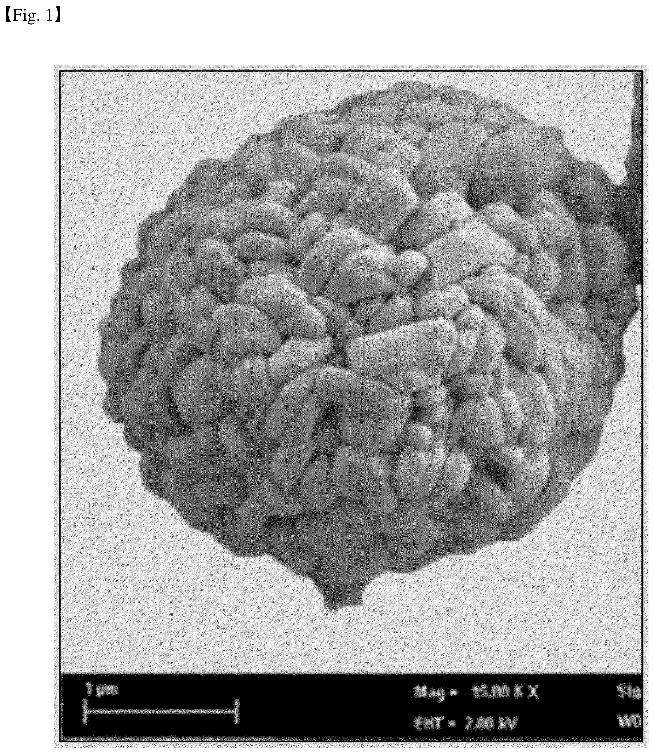

More specifically, first, an SEM (scanning electron microscope) image of the positive electrode active material for an all-solid-state battery in the form of secondary particles formed by aggregation of a plurality of primary particles is derived. FIG. 1 is an example of an SEM image of a positive electrode active material for an all-solid-state battery.

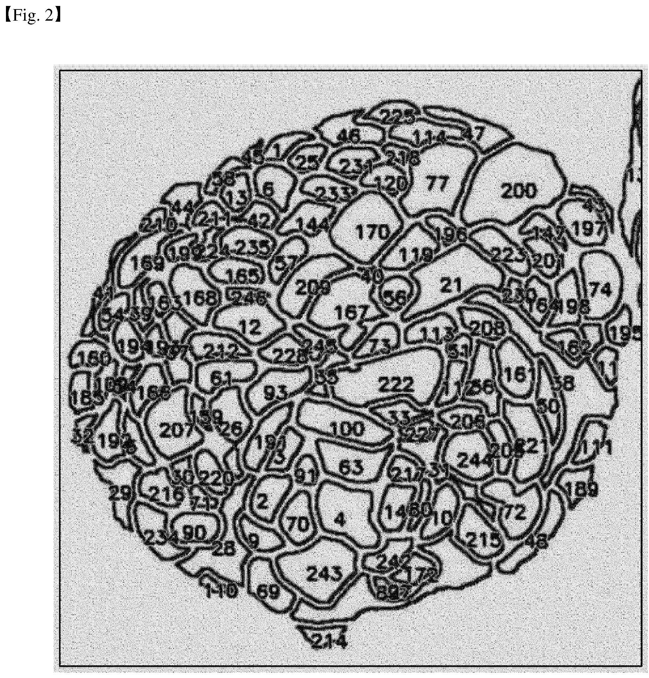

Next, an average radius of the primary particles and an average number of primary particles present in the secondary particles are derived from the SEM image. FIG. 2 is an example of a software image showing a process of deriving the average radius of the primary particles and the average number of primary particles present in the secondary particles.

Referring to FIG. 2, boundaries of individual primary particles in the secondary particles are removed through image software, and then contours of the individual primary particles are detected to derive an image segmented into individual primary particle units. Through such software image, the average radius of the primary particles and the average number of primary particles present in the secondary particles can be derived. Meanwhile, at this time, the number of primary particles means the number of primary particles located at a surface portion of the positive electrode active material observed on a two-dimensional SEM image, and does not mean the number of all primary particles actually present in the three-dimensional positive electrode active material.

At this time, the derived average radius of the primary particles may be an area-based average radius calculated based on the area of the primary particles. More specifically, the area-based average radius may be calculated by measuring an area (pixel) occupied by each primary particle in the secondary particles from the SEM image derived from the first step through image software, specifying a radius of a circle having the same area as the radius of each primary particle, and obtaining an average value of radii of each primary particle in the secondary particles.

Meanwhile, the derived average radius of the primary particles and the average number of primary particles present in the secondary particles may be average values of values measured for 10 arbitrary different secondary particles in a positive electrode active material sample. Through this, measurement deviation and error can be reduced.

Next, the average active area is derived from the derived average radius of the primary particles and the average number of primary particles present in the secondary particles.

At this time, the derived average active area may be a spherical-reference average active area derived by assuming that the primary particles are spherical.

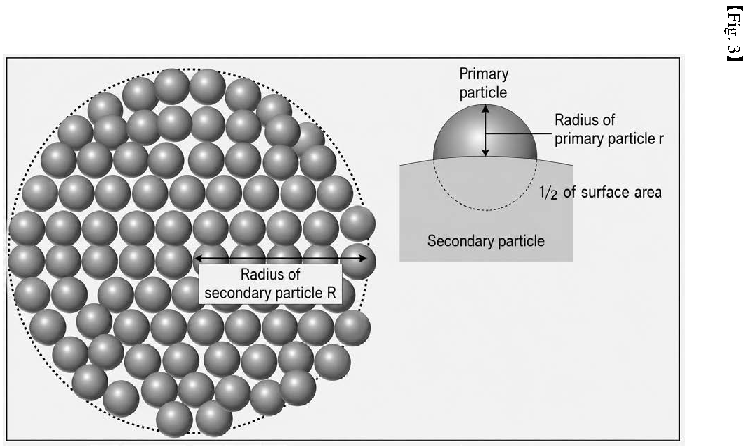

More specifically, FIG. 3 is a conceptual view showing a process of deriving a spherical-reference average active area by assuming that the primary particles are spherical. Referring to FIG. 3, the spherical-reference average active area may be calculated by the following method. First, the average radius of the primary particles derived by the above method is assumed to be a radius of spherical particles. In addition, half of the total area of the spherical particles is assumed to be an active area directly contacting the solid electrolyte. Then, the average active area of the positive electrode active material can be calculated by multiplying the active area of each primary particle derived therefrom by the average number of primary particles present in the secondary particles.

Hereinafter, other configurations of the positive electrode active material for an all-solid-state battery according to one embodiment of the present invention will be described in more detail.

The positive electrode active material for an all-solid-state battery according to one embodiment of the present invention may include a lithium metal oxide having a nickel-containing layered crystal structure and a coating layer disposed on the lithium metal oxide.

The lithium metal oxide having a nickel-containing layered crystal structure may include nickel and may further include cobalt and/or manganese as necessary, and may further include other doping elements.

At this time, the content of nickel in the lithium metal oxide may be 70 mol% or more, and more specifically 75 mol% or 80 mol% or more, based on the total number of moles of metals excluding lithium. Accordingly, high-capacity characteristics of a battery can be implemented.

In addition, the coating layer may contain a lithium ion conductive oxide. Since the coating layer contains the lithium ion conductive oxide, not only an effect of improving lifespan characteristics by suppressing side reactions with the electrolyte due to coating layer coverage, but also an effect of preserving capacity and rate characteristics can be simultaneously implemented.

Meanwhile, the coating layer may be formed by a wet coating method using fluidized coating layer equipment. Accordingly, the entire surface of the secondary particles of the lithium metal oxide can be covered with a coating layer having a very thin and uniform thickness, and effects due to coating layer coverage can be more preferably implemented.

The lithium ion conductive oxide may more specifically be represented by the following Chemical Formula 1.

[Chemical Formula 1] Liₓ₁D_{y1}O_{z1}

In Chemical Formula 1, 0≤x1≤3, 0<y1≤2, 0<z1≤4, and D is Zr, Nb, Ti, V, B, P, or a combination thereof.

The lithium ion conductive oxide may more specifically be represented by the following Chemical Formula 2.

[Chemical Formula 2] Liₓ₂Zr_{y2}O_{z2}

In Chemical Formula 2, 0.5≤x2≤2.2, 0.9≤y2≤1.1, and 2.6≤z≤3.4.

The lithium ion conductive oxide of Chemical Formula 1 or Chemical Formula 2 may be amorphous.

The lithium metal oxide according to the present invention may more specifically be represented by the following Chemical Formula 3.

[Chemical Formula 3] Liₐ[Niₓ₃Co_{y3}Mn_{z3}M_{w}]O₂

In Chemical Formula 3, 0.8≤a≤1.3, 0.7≤x3<1, 0≤y3≤0.3, 0≤z3≤0.3, 0≤w≤0.2, x3+y3+z3+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

In the lithium metal oxide of Chemical Formula 1, lithium may be included in an amount corresponding to a, that is, 0.8≤a≤1.3. When a is too small, capacity may decrease, and when a is too large, strength of the calcined positive electrode active material may increase, thereby making pulverization difficult, and an amount of gas generation may increase due to an increase in lithium by-products. In consideration of an effect of improving capacity characteristics of the positive electrode active material according to control of the lithium content and a sinterability balance during manufacture of the active material, lithium may be more preferably included in an amount of 0.9≤a≤1.1.

In the lithium metal oxide of Chemical Formula 1, nickel may be included in an amount corresponding to x3, that is, 0.7≤x3<1, and more specifically 0.75≤x3<1 or 0.80≤x3<1. When the nickel content satisfies the above range, high capacity of a battery can be achieved.

In the lithium metal oxide of Chemical Formula 1, cobalt may be included in an amount corresponding to y3, that is, 0≤y3≤0.3. When the cobalt content is too small, growth of crystal grain size may be inhibited, and output characteristics may deteriorate. When the cobalt content is too large, manufacturing costs may increase and reversible capacity may decrease.

In the lithium metal oxide of Chemical Formula 1, manganese may be included in an amount corresponding to z3, that is, 0≤z3≤0.3. When the manganese content is too small, production costs may increase and active material stability may decrease. When the manganese content is too large, capacity and output characteristics of the battery may deteriorate.

In the lithium metal oxide of Chemical Formula 1, M, which is another doping element, may be included in an amount corresponding to w, that is, 0≤w1≤0.2. At this time, M may be Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof. The content of the other doping element may be appropriately selected to implement another doping effect.

### 2. All-Solid-State Battery

Another embodiment of the present invention provides a positive electrode including the above-described positive electrode active material for an all-solid-state battery.

More specifically, the positive electrode may include a positive electrode current collector and a positive electrode active material layer disposed on the positive electrode current collector, and the positive electrode active material layer may include the above-described positive electrode active material for an all-solid-state battery, a sulfide-based solid electrolyte, and a conductive material. In addition, the positive electrode active material layer may further include a binder.

At this time, the sulfide-based solid electrolyte may be, for example, a sulfide-based solid electrolyte having an argyrodite-based crystal structure.

The sulfide-based solid electrolyte having an argyrodite-based crystal structure may be, for example, Li₆PS₅Cl, Li₆PS₅Br, Li₆PS₅I, or a combination thereof, but is not limited thereto.

At least a portion of the crystal structure of the sulfide-based solid electrolyte having an argyrodite-based crystal structure may be doped with a doping element.

The conductive material may be, for example, graphite, carbon black, acetylene black, Ketjen black, carbon nanofibers, carbon nanotubes, or a combination thereof.

The binder may be, for example, polyvinylidene fluoride, styrene-butadiene rubber (SBR), polytetrafluoroethylene, polyvinylidene fluoride, a vinylidene fluoride/hexafluoropropylene copolymer, polyacrylonitrile, polymethyl methacrylate, or a combination thereof.

The positive electrode active material layer may further include additives such as a filler, a coating agent, a dispersant, and an ion conductive aid, in addition to the above-described positive electrode active material, solid electrolyte, binder, and conductive material.

Still another embodiment of the present invention provides an all-solid-state battery including a positive electrode, a negative electrode, and a solid electrolyte layer disposed therebetween, wherein the positive electrode includes the above-described positive electrode active material for an all-solid-state battery.

A description of the positive electrode is the same as described above and thus will be omitted.

The solid electrolyte layer may include a sulfide-based solid electrolyte.

The sulfide-based solid electrolyte may be, for example, an argyrodite-type compound including at least one selected from Li₇₋ₓPS₆₋ₓClₓ, 0≤x≤2, Li₇₋ₓPS₆₋ₓBrₓ, 0≤x≤2, and Li₇₋ₓPS₆₋ₓIₓ, 0≤x≤2. In particular, the sulfide-based solid electrolyte may be an argyrodite-type compound including at least one selected from Li₆PS₅Cl, Li₆PS₅Br, and Li₆PS₅I. However, the present invention is not limited thereto.

At least a portion of the crystal structure of the above-described argyrodite-type compound of the sulfide-based solid electrolyte may be doped with a doping element.

The solid electrolyte layer may further include a binder. The binder included in the solid electrolyte layer may be, for example, styrene-butadiene rubber (SBR), polytetrafluoroethylene, polyvinylidene fluoride, polyethylene, or the like, but is not limited thereto, and any material used as a binder in the art may be used. The binder of the solid electrolyte layer may be the same as or different from binders included in the positive electrode active material layer and the negative electrode active material layer.

The negative electrode may include a negative electrode current collector and a negative electrode active material layer disposed on the negative electrode current collector, and the negative electrode active material layer may include a negative electrode active material.

The negative electrode active material includes a material capable of reversible intercalation/deintercalation of lithium ions, lithium metal, an alloy of lithium metal, a material capable of doping and dedoping lithium, or a transition metal oxide.

As the material capable of reversible intercalation/deintercalation of lithium ions, a carbon material may be used, and any carbon-based negative electrode active material generally used in lithium ion secondary batteries may be used. Representative examples thereof may include crystalline carbon, amorphous carbon, or a combination thereof. Examples of the crystalline carbon may include graphite such as amorphous, plate-like, flake-like, spherical, or fibrous natural graphite or artificial graphite, and examples of the amorphous carbon may include soft carbon (low-temperature calcined carbon), hard carbon, mesophase pitch carbide, calcined coke, and the like.

As the alloy of lithium metal, an alloy of lithium and a metal selected from the group consisting of Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, Si, SiOₓ (0<x<2), a Si-Y alloy, wherein Y is an element selected from the group consisting of alkali metals, alkaline earth metals, Group 13 elements, Group 14 elements, transition metals, rare earth elements, and combinations thereof, and is not Si, Sn, SnO₂, Sn-Y, wherein Y is an element selected from the group consisting of alkali metals, alkaline earth metals, Group 13 elements, Group 14 elements, transition metals, rare earth elements, and combinations thereof, and is not Sn, and the like may be used, and at least one thereof may also be mixed with SiO₂ and used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof.

Examples of the transition metal oxide may include vanadium oxide, lithium vanadium oxide, and the like.

The negative electrode active material layer may also include a binder and may optionally further include a conductive material.

The binder serves to suitably attach negative electrode active material particles to each other and also to suitably attach the negative electrode active material to a current collector, and representative examples thereof may include polyvinyl alcohol, carboxymethyl cellulose, hydroxypropyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, and the like, but are not limited thereto.

The conductive material is used to impart conductivity to the electrode, and any electron conductive material may be used as long as it does not cause a chemical change in the battery to be configured. Examples thereof may include carbon-based materials such as natural graphite, artificial graphite, carbon black, acetylene black, Ketjen black, and carbon fibers; metal-based materials such as metal powder or metal fibers such as copper, nickel, aluminum, and silver; conductive polymer materials such as polyphenylene derivatives; or conductive materials including mixtures thereof.

As the current collector, a material selected from the group consisting of copper foil, nickel foil, stainless steel foil, titanium foil, nickel foam, copper foam, a polymer substrate coated with a conductive metal, and combinations thereof may be used.

Hereinafter, embodiments of the present invention will be described in more detail through Examples. However, the following Examples are only preferred embodiments of the present invention, and the present invention is not limited by the following Examples.

### Example 1

### (1) Manufacture of Positive Electrode Active Material

### (Formation of Lithium Metal Oxide)

A Ni_{0.83}Co_{0.12}Mn_{0.05}(OH)₂ transition metal hydroxide precursor and LiOH·H₂O as a lithium raw material were mixed at a molar ratio of 1:1.02 to form a mixture.

1 kg of the mixture was charged into a tube furnace and calcined at a temperature of 730°C for 8 hours. During the calcination, pure O₂ was supplied such that an O₂ concentration of 99% or more could be maintained, thereby forming a LiNi_{0.83}Co_{0.12}Mn_{0.05}O₂ lithium metal oxide.

### (Preparation of Coating Solution)

Subsequently, lithium was dissolved in dehydrated ethanol, and zirconium(IV) tetrapropoxide (70 wt% in 1-propanol) was added and stirred to prepare a coating solution containing lithium ions and zirconium ions. At this time, the concentration of zirconium ions in the coating solution was 0.11 mol/L.

### (Spraying of Coating Solution)

420 mL of the coating solution was sprayed onto 1 kg of the formed lithium transition metal oxide using a fluidized coating apparatus (MP-01, POWREX) to perform a coating process.

### (Coating Heat Treatment)

Thereafter, the lithium transition metal oxide onto which the coating solution was sprayed was charged into a Saggar, and heat-treated at 300°C while oxygen was supplied to a box-type electric furnace, thereby manufacturing a positive electrode active material in which an amorphous Li₂ZrO₃ coating layer was formed on a surface of the lithium transition metal oxide.

### (2) Manufacture of Lithium Secondary Battery

75 wt% of the manufactured positive electrode active material, 22 wt% of an argyrodite solid electrolyte (Li₆PS₅Cl), and 3 wt% of Super C65 as a conductive material were well mixed with a solvent in which a small amount of binder was dissolved to prepare a mixed paste. An electrode plate was manufactured using the mixed paste and dried to manufacture a composite electrode plate for a positive electrode.

100 mg of an argyrodite solid electrolyte (Li₆PS₅Cl), which functions as a separator, was first charged into a jig for evaluation of an all-solid-state battery and pressed at 300 MPa or more to have a thickness of about 800 µm, and then a positive electrode plate was inserted on one side and secondarily pressed to manufacture a positive electrode portion.

Thereafter, a Li-In alloy was inserted on the other side, and an appropriate pressure was applied to manufacture a battery for evaluation of an all-solid-state battery.

### Other Examples and Comparative Examples

Positive electrode active materials and all-solid-state batteries were manufactured in the same manner as in Example 1, except that a calcination temperature and a calcination time were differently adjusted in the step of forming the lithium metal oxide.

Tables 1 and 2 below summarize evaluation results of physical properties of positive electrode active materials and electrochemical characteristics of all-solid-state batteries described below.

**[Table 1]**

| | Secondary Particle Average Particle Diameter (D50, µm) | Primary Particle Average Radius (µm) | Average Number of Primary Particles | Average Active Area (µm²) |
|---|---|---|---|---|
| Example 1 | 4.18 | 0.24 | 256 | 95.2 |
| Example 2 | 3.93 | 0.21 | 348 | 101 |
| Example 3 | 3.86 | 0.23 | 276 | 91.3 |
| Example 4 | 3.93 | 0.22 | 305 | 90.4 |
| Example 5 | 3.93 | 0.22 | 321 | 96.2 |
| Example 6 | 3.96 | 0.22 | 358 | 107.7 |
| Comparative Example1 | 3.9 | 0.23 | 322 | 111.1 |
| Comparative Example2 | 3.77 | 0.26 | 306 | 128.6 |
| Comparative Example3 | 4.18 | 0.26 | 296 | 123.5 |
| Comparative Example4 | 3.89 | 0.26 | 310 | 134.7 |
| Comparative Example5 | 3.96 | 0.23 | 367 | 118.4 |
| Comparative Example6 | 3.77 | 0.26 | 310 | 134.7 |
| Comparative Example7 | 3.85 | 0.26 | 300 | 123.1 |

**[Table 2]**

| | Initial Capacity | | | Rate Characteristics | | | | | Resistance Characteristics |
|---|---|---|---|---|---|---|---|---|---|
| | Charge | Discharge | Initial Efficiency | 0.1C | 0.5C | 1.0C | 0.5C/0.1C | 1.0C/0.1C | Cell Resistance |
| | mAh/g | mAh/g | % | mAh/g | mAh/g | mAh/g | % | % | Ω |
| Example 1 | 226.3 | 212.6 | 94.00% | 212 | 196.9 | 181.3 | 92.9 | 85.5 | 0.771 |
| Example 2 | 225.5 | 212.1 | 94.10% | 211.6 | 196.5 | 185.4 | 92.9 | 87.6 | 0.775 |
| Example 3 | 226.2 | 213.2 | 94.20% | 212.4 | 197.1 | 184.5 | 92.8 | 86.9 | 0.765 |
| Example 4 | 221.6 | 209.6 | 94.60% | 209.1 | 193.9 | 177 | 92.7 | 84.6 | 0.763 |
| Example 5 | 221.6 | 209.6 | 94.60% | 209.1 | 193.9 | 177 | 92.7 | 84.6 | 0.763 |
| Example 6 | 220.8 | 208.1 | 94.20% | 207.3 | 190.7 | 177.5 | 92 | 85.6 | 0.774 |
| Comparative Example1 | 224.5 | 213.3 | 95.00% | 212.8 | 195.1 | 173.9 | 91.7 | 81.7 | 0.786 |
| Comparative Example2 | 216.8 | 205.8 | 94.90% | 205.3 | 188.2 | 168.1 | 91.7 | 81.9 | 0.811 |
| Comparative Example3 | 215.5 | 203 | 94.20% | 202.4 | 184.6 | 166 | 91.2 | 82 | 0.819 |
| Comparative Example4 | 220.9 | 208 | 94.20% | 207.5 | 188.2 | 166.9 | 90.7 | 80.5 | 0.787 |
| Comparative Example5 | 218.6 | 205.4 | 94.00% | 204.6 | 184 | 166.4 | 89.9 | 81.3 | 0.801 |
| Comparative Example6 | 222.9 | 208.7 | 93.60% | 207.8 | 185.6 | 167.2 | 89.3 | 80.5 | 0.793 |
| Comparative Example7 | 218.5 | 206.2 | 94.40% | 205.6 | 183.5 | 164.2 | 89.3 | 79.9 | 0.786 |

### Experimental Example 1: Analysis of Physical Properties of Positive Electrode Active Material

### (1) Evaluation of Secondary Particle Average Particle Diameter (D50)

A particle diameter of the secondary particles corresponding to 50% of a volume cumulative amount was measured using a laser diffraction method.

### (2) Evaluation of Primary Particle Average Radius, Average Number of Primary Particles in Secondary Particles, and Average Active Area of Positive Electrode Active Material

An SEM (scanning electron microscope) image was derived from the positive electrode active material samples prepared in the Examples and Comparative Examples. The magnification of the SEM image was 15,000 times.

Thereafter, an average radius of primary particles and an average number of primary particles present in secondary particles were derived from the SEM image. Specifically, boundaries of individual primary particles in the secondary particles are removed through image software, and then contours of the individual primary particles are detected to derive an image segmented into individual primary particle units. Through such software image, the average radius of the primary particles and the average number of primary particles present in the secondary particles can be derived.

Meanwhile, at this time, the number of primary particles means the number of primary particles located at a surface portion of the positive electrode active material observed on a two-dimensional SEM image, and does not mean the number of all primary particles actually present in the three-dimensional positive electrode active material.

In addition, the derived average radius of the primary particles was obtained as an area-based average radius calculated based on the area of the primary particles. Specifically, the area-based average radius was calculated by measuring an area (pixel) occupied by each primary particle in the secondary particles from the SEM image derived from the first step through image software, specifying a radius of a circle having the same area as the radius of each primary particle, and obtaining an average value of radii of each primary particle in the secondary particles.

Meanwhile, the derived average radius of the primary particles and the average number of primary particles present in the secondary particles were average values of values measured for 10 arbitrary different secondary particles in a positive electrode active material sample.

Thereafter, the average active area was derived from the derived average radius of the primary particles and the average number of primary particles present in the secondary particles. At this time, the average active area was derived by assuming that the primary particles were spherical. More specifically, the average radius of the primary particles derived by the above method is assumed to be a radius of spherical particles, and half of the total area of the spherical particles is assumed to be an active area directly contacting the solid electrolyte. Then, the average active area of the positive electrode active material was calculated by multiplying the active area of each primary particle derived therefrom by the average number of primary particles present in the secondary particles.

### Experimental Example 2: Evaluation of Electrochemical Characteristics of All-Solid-State Battery

### (1) Evaluation of Initial Capacity and Initial Efficiency

After all-solid-state battery half cells were manufactured and aged at 25°C for 12 hours, a charge/discharge test was performed at 30°C. For initial capacity evaluation, 210 mAh/g was used as a reference capacity, and charging was performed to 4.25 V at a constant current of 0.1 C, followed by switching to constant voltage, and charging was continued until the end current reached 0.05 C. After charging, a rest time of 10 minutes was provided, and discharge was performed to 2.5 V at a constant current of 0.1 C based on a reference capacity of 200 mAh/g.

### (2) Evaluation of Rate Characteristics

Output characteristics were evaluated by comparing an initial discharge capacity during 0.1C charge-0.1C discharge with initial discharge capacities during 0.1C charge-0.5C/1.0C discharge.

### (3) Evaluation of Resistance Characteristics

After all-solid-state battery half cells were manufactured, charging was performed at 25°C to 4.25 V at a constant current of 0.5 C, followed by switching to constant voltage, and charging was performed until the end current reached 0.05 C. After charging, a rest time of 10 minutes was provided, and discharge was performed to 2.5 V at a constant current of 1.0 C. At this time, impedance was measured to evaluate resistance characteristics.

Referring to Tables 1 and 2, in the case of Examples 1 to 6, in which the average active area of the positive electrode active material satisfied the range according to the present invention, it was confirmed that rate characteristics and resistance characteristics in particular were excellently implemented.

In contrast, in the case of Comparative Examples 1 to 7, as a result of the average active area being outside the range according to the present invention, it was confirmed that rate characteristics and resistance characteristics deteriorated compared with the Examples.

Meanwhile, it was confirmed that capacity characteristics (initial discharge capacity) had no significant tendency with respect to the average active area of the positive electrode active material.

Although preferred embodiments of the present invention have been described above, the present invention is not limited thereto, and various modifications may be made and practiced within the scope of the claims, the detailed description of the invention, and the accompanying drawings, and such modifications also naturally fall within the scope of the present invention.

Accordingly, the substantial scope of rights of the present invention should be defined by the appended claims and equivalents thereof.

## Claims

1. A positive electrode active material for an all-solid-state battery, the positive electrode active material being in the form of secondary particles formed by aggregation of a plurality of primary particles,
wherein the secondary particles have an average particle diameter (D50) of 2 µm to 7 µm,
and
wherein the positive electrode active material has an average active area of 50 µm² to 110 µm².

2. The positive electrode active material for an all-solid-state battery of claim 1,
wherein the positive electrode active material comprises a lithium metal oxide having a nickel-containing layered crystal structure and a coating layer disposed on the lithium metal oxide.

3. The positive electrode active material for an all-solid-state battery of claim 2,
wherein a content of nickel in the lithium metal oxide is 70 mol% or more based on a total number of moles of metals excluding lithium.

4. The positive electrode active material for an all-solid-state battery of claim 2,
wherein the coating layer contains a lithium ion conductive oxide.

5. The positive electrode active material for an all-solid-state battery of claim 4,
wherein the lithium ion conductive oxide is represented by the following Chemical Formula 1:
[Chemical Formula 1] Liₓ₁D_{y1}O_{z1}
wherein, in Chemical Formula 1, 0≤x1≤3, 0<y1≤2, 0<z1≤4, and D is Zr, Nb, Ti, V, B, P, or a combination thereof.

6. The positive electrode active material for an all-solid-state battery of claim 4,
wherein the lithium ion conductive oxide is represented by the following Chemical Formula 2:
[Chemical Formula 2] Liₓ₂Zr_{y2}O_{z2}
wherein, in Chemical Formula 2, 0.5≤x2≤2.2, 0.9≤y2≤1.1, and 2.6≤z≤3.4.

7. The positive electrode active material for a lithium secondary battery of claim 2,
wherein the lithium metal oxide is represented by the following Chemical Formula 3:
[Chemical Formula 3] Liₐ[Niₓ₃Co_{y3}Mn_{z3}M_{w}]O₂
wherein, in Chemical Formula 3, 0.8≤a≤1.3, 0.7≤x3<1, 0≤y3≤0.3, 0≤z3≤0.3, 0≤w≤0.2, x3+y3+z3+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

8. A positive electrode for an all-solid-state battery, comprising the positive electrode active material of claim 1.

9. An all-solid-state battery comprising the positive electrode for an all-solid-state battery of claim 8.
